# EUROPEAN PATENT APPLICATION

(11) **EP 2 003 896 A1**
(43) Date of publication of application: **17.12.2008**
(21) Application number: 07011510.0
(22) Date of filing: 12.06.2007
(51) Int. Cl.: H04N 7/26, H04N 7/30, H04N 7/50

(54) **Statistical image enhancement**

(71) Applicant: Panasonic Corporation, Kadoma-shi Osaka 571-8501 (JP)
(72) Inventor: Wedi, Thomas, 63225 Langen (DE); Knicker, Florian, 63225 Langen (DE)
(74) Representative: Grünecker, Kinkeldey, Stockmair & Schwanhäusser Anwaltssozietät

(57) **Abstract**

The present invention relates to image enhancement by exploiting statistical properties of reference images. In particular, images may be sharpened by reconstructing missing frequency components in accordance with statistical constraints that are determined from higher order statistical properties of a reference image that corresponds to the difference of the original image and a lowpass filtered version thereof. This form of statistical image enhancement may also be applied to image and video coding in order to achieve superior image qualities at higher compression gains by transmitting statistical properties of the coding error together with the encoded images.

## Description

The present invention relates to methods for improving subjective picture quality and in particular to methods for coding images and video data providing an improved subjective picture quality.

### BACKGROUND OF THE INVENTION

Traditional signal representation methods aim to represent the signal in a sense that an objective quality measure based on the MSE (mean square error) is minimized. Examples are PCM (pulse code modulation), DPCM (differential pulse code modulation), or transform based methods.

These measures often do not correspond to the results when a human observer compares picture qualities subjectively. It is known that the HVS (human visual system) is sensitive for several kinds of image properties when comparing image qualities. More specifically, the HVS. is not able to distinguish textures having the same higher order statistics when viewing only preattentively. Due to this, some texture synthesis methods (cf. e.g. J. Portilla and E. P. Simoncelli, A parametric texture model based on joint statistics of complex wavelet coefficients, Int. J. Comput. Vis., vol. 40, no. 1, pp. 49-71, 2000) are based on synthesizing textures matching the higher order statistics of another given texture. Texture synthesis methods are mainly used in image retouching to fill in holes or remove objects in scenes. But also in video coding there are approaches to synthesize complex textures rather than coding them directly (e.g. A. Dumitras and B. G. Haskell, An encoder-decoder texture replacement method with application to content-based movie coding, IEEE Trans. Circuits Syst. Video Technol., 14: 825-840, 2004, and P. Ndjiki-Nya, et al., Improved H.264 coding using texture analysis and synthesis, Proc Icip 2003, 3: 849-852, 2003).

Another conventional way to improve the subjective image quality for the HVS is to sharpen images. Common techniques are the use of an unsharp mask or local contrast enhancement to render the image sharper. The effects of these techniques are often impressive but also can lead to unnatural appearance of the pictures or to halo artifacts.

### SUMMARY OF THE INVENTION

The aim of the present invention is to provide methods for improving subjective image quality, and in particular to provide methods for image and video coding that yield an improved subjective image quality, and corresponding encoder, decoder, and image processing apparatuses.

This is achieved by the features as set forth in the independent claims.

Preferred embodiments are the subject matter of dependent claims.

It is the particular approach of the present invention to improve subjective image quality by reconstructing missing frequency components based on their statistical properties.

According to a first aspect of the present invention, a method for encoding images is provided. The method comprises the steps of compressing an input image, encoding the compressed image, computing a difference image of the input image and the compressed image, extracting statistical properties of the computed difference image, and encoding the extracted statistical properties of the computed difference image.

According to a further aspect of the present invention, a method for decoding images is provided. The method comprises the steps of decoding a compressed image, decompressing the decoded image, decoding statistical properties of a difference image, generating a first filter based on the decoded statistical properties of the difference image, applying the first filter to the decompressed image to generate a filtered image, and adding the filtered image to the decompressed image to generate an output image.

According to a further aspect of the present invention, a method for enhancing images is provided. The method comprises the steps of receiving an input image, receiving statistical properties of a difference image, generating a first filter based on the received statistical properties of the difference image, applying the first filter to the input image to generate a filtered image, and adding the filtered image to the input image to generate an output image.

According to a further aspect of the present invention, an image encoder is provided. The image encoder comprises an image compressor for compressing an input image, a first encoder for encoding the compressed image, a subtractor for computing a difference image of the input image and the compressed image, a first statistical analyzer for extracting statistical properties of the computed difference image, and a second encoder for encoding the extracted statistical properties of the computed difference image.

According to a further aspect of the present invention, an image decoder is provided. The image decoder comprises a first decoder for decoding a compressed image, an image decompresser for decompressing the decoded image, a second decoder for decoding statistical properties of a difference image, an image processing unit for generating a first filter based on the decoded statistical properties of the difference image and for applying the first filter to the decompressed image to generate a filtered image, and an adder for adding the filtered image to the decompressed image to generate an output image.

According to a further aspect of the present invention, an image processing apparatus for enhancing images is provided. The apparatus comprises a first input means for receiving an input image, a second input means for receiving statistical properties of a difference image, a first image processing unit for generating a first filter based on the received statistical properties of the difference image and for applying the first filter to the input image to generate a filtered image, and an adder for adding the filtered image to the input image to generate an output image.

Preferably, the statistical properties of the difference image employed comprise values of the autocorrelation function and at least one of mean, variance, skewness, and kurtosis. These statistical properties can be determined by efficient algorithms and result in naturally looking textures of the enhanced images.

Preferably, the first filter is adapted to adjust statistical properties of the filtered image to the statistical properties of the difference image. Preferably, the first filter is generated based on statistical properties of the difference image, i.e., the target values of the statistical properties, and statistical properties extracted from the decompressed (input) image itself, i.e. the actual values. In this manner, missing frequency components can be reconstructed from their statistical properties alone.

Preferably, the methods and apparatuses further employ statistical properties of the input image (reference image), generate a second filter based on these statistical properties, and apply the second filter to the output image. Preferably, the second filter is adapted to adjust statistical properties of the output image to the decoded (received) statistical properties of the reference image. These properties preferably comprise at least one of mean, variance, skewness, and kurtosis. In this manner, the resulting image quality can be further improved.

Preferably, the methods and apparatuses further compute the difference between the output image and the decoded (input) image and iterate the filtering steps and the adding step on the computed difference. In this manner, the statistical properties of the missing frequency components can be matched with those of the reference images more accurately.

Preferably, a transformation based coding scheme is employed to compress and decompress the input/decoded image. State of the art transformation based coding schemes can achieve excellent coding efficiencies with highly efficient algorithms.

Upon encoding input images, the input image is preferably subjected to a low-pass filter prior to being compressed. Due to the attenuation of high-frequency components, the low-pass filtered image can be compressed more efficiently. The attenuated components, however, can be reconstructed from their statistical properties at the decoder side. In this manner, coding efficiency can be improved without affecting image quality.

The above and other objects and features of the present invention will become more apparent from the following description and preferred embodiments given in conjunction with the accompanying drawings, in which:
- Fig. 1: is a block diagram of a statistical image enhancer according to an embodiment of the present invention;
- Fig. 2: is a block diagram of an improved image/video encoder according to an embodiment of the present invention;
- Fig. 3: is a block diagram of an improved image/video decoder according to an embodiment of the present invention;

### DETAILED DESCRIPTION

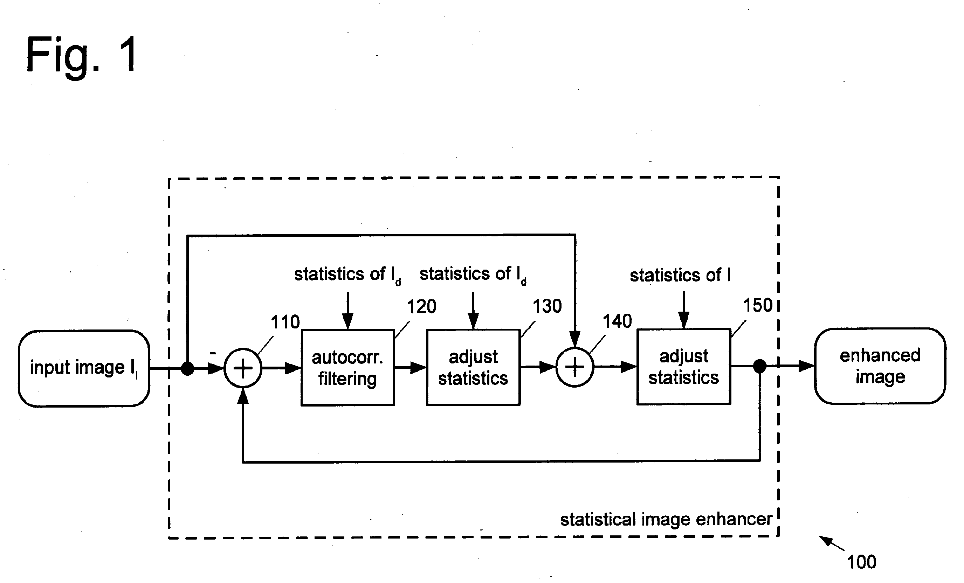

The present invention provides an image enhancement method that tweaks an image based on statistical data of a reference image. For example, if an original image I and a low-pass image Iₗ are given, the present invention can be used to enhance the low-pass image Iₗ by reconstructing the missing frequency components by adjusting some image statistics. In a first step, the higher order statistics and the autocorrelation of the original image I and the difference image I_{d} = I - Iₗ are analyzed. In a second step, the result of the analysis is used to reconstruct the missing frequency components in the low-pass image Iₗ. The basic idea is illustrated by the block diagram of Figure 1.

Figure 1 is a block diagram of a statistical image enhancing unit 100 according to an embodiment of the present invention.

An input image Iₗ, which may correspond to a low-pass filtered version of an original image I, is fed to a first image processing unit 120 that applies a filter in order to match spatial statistical properties of the input image with spatial statistical properties of a first reference image I_{d}. The first reference image may correspond to the difference between the original image and a lowpass filtered version thereof, I_{d} = I - Iₗ. In this case, the filter basically corresponds to a carefully designed high-pass filter. The thus filtered image is then fed to a second image processing unit 130 that matches higher order statistical properties with those of the first reference image I_{d}. The output of the second image processing unit 130 is added to the input image by means of adder 140 and fed to a third image processing unit 150 in order to match higher order statistical properties with those of a second reference image I, such as the original image.

Since adjusting the statistical properties in the individual image processing units 120, 130, and 150 cannot be performed independently of each other, an iteration may be executed in order to further improve the result. To this end, the output of the third image processing unit 150 is fed back to a subtractor 110 to subtract the input image and to apply the above described processing steps to the thus computed difference image. A number of about seven iterations has turned out to yield optimal results. In the zero-th iteration, when no output of the third image processing unit 150 is yet available, the subtractor 110 may be skipped, for instance by means of a switch (not shown), so as to directly feed the input image to the first image processing unit 120. Alternatively, an optional input image (not shown) may be provided, for instance from a conventional sharpening algorithm to substitute the non-available output of the third image processing unit 150.

The first image processing unit 120 preferably performs autocorrelation filtering in order to adjust (parts of) the autocorrelation function of the image to an autocorrelation function computed for the first reference image. To this end, the first image processing unit 120 determines filter coefficients based on values of the autocorrelation function of the input image and based on values of the autocorrelation function of the first reference image, which form part of its spatial statistical properties. Any method known in the art for determining such a filter may be employed, in particular the method disclosed in J. Portilla and E. P. Simoncelli, A parametric texture model based on joint statistics of complex wavelet coefficients, Int. J. Comput. Vis., vol. 40, 2000. The present invention, however, is not restricted to autocorrelation filtering and any other spatial statistical property of the image may be used to match the input image with the reference image, including statistical properties of Fourier or wavelet transform coefficients, correlations between different subbands of the image, and so on. Moreover, other approaches to design optimal filters may be employed, such as a Wiener filter design.

In case of image sharpening, values of the autocorrelation function in a neighborhood of zero are particularly relevant. Accordingly, the first image processing unit 120 determines filter coefficients of an *NxN-*tap filter on the basis of *NxN* zero-neighborhood values of the autocorrelation function of the input image and the first reference image. A number of N = 7 has turned out to yield optimum results, although any other number of taps may be employed likewise. A filter with the thus determined filter coefficients is then applied to the input image in order to generate the output of the first image processing unit 120.

The second and the third image processing units 130, 150 are adapted to adjust higher order statistical properties of their respective input signals. The higher order statistical properties comprise marginal statistics descriptors such as mean, variance, skewness and kurtosis of the pixel values. Mean and variance, for instance, may be considered as a measure for average brightness and contrast, respectively, of the image. Optimum results can be obtained by adjusting the marginal distribution up to and including its fourth moment, i.e., by adjusting all of mean, variance, skewness and kurtosis. The present invention, however, is not restricted in this respect and other statistical properties may likewise be employed, including only a subset of the described properties, even higher order moments of the marginal distribution, other statistical properties such as spatial correlations of the pixel values, correlations between different subbands of the image, and so on.

The second and the third image processing units 130, 150 determine a transformation that maps each pixel value to a target pixel value so that the desired marginal statistics constraints are met. Mean and variance, for instance, can be matched by subtracting the mean of the input signal from each pixel value, scaling the result by the ratio of the target standard deviation (i.e. the square root of the variance) and the standard deviation of the input signal, and adding the target mean. Skewness and kurtosis can likewise be adjusted by applying a (6th-order) polynomial to the pixel values. Any method known in the art for determining the coefficients for such a transformation can be employed, including gradient projection algorithms or the method disclosed by J. Portilla and E. P. Simoncelli, ibid.

Each of the first, second, and third image processing units performs a nonlinear image transformation in the sense that the coefficients involved depend on the current image. Hence, the filter and transformation applied by the image processing units are updated in each iteration. As the statistical properties of the image converge to the desired values, the impact of the filter/transformation diminishes, so that the iteration is converging.

According to the present invention, subjective image quality of the input image can be enhanced by employing statistical properties of reference images, in particular of reference images that contain frequency components that are lacking in the input image. It is to be noted that the input image is not enhanced by employing the reference images directly. Rather, only selected statistical properties of the reference image are taken into account. However, the relevant statistical properties may also be obtained from other sources, estimated, or approximated. For example, if the input image contains more frequency information in one image direction, the statistics in this direction can be used to construct high frequency components in the orthogonal direction.

According to the present invention, problems of conventional sharpening algorithms are avoided. In particular, over-sharpening and halo artifacts do not occur due to the use of statistical properties of a reference image. Moreover, the present invention is not restricted to the purpose of sharpness enhancement. Due the particular choice of the statistics that is taken into account, especially textures appear very natural.

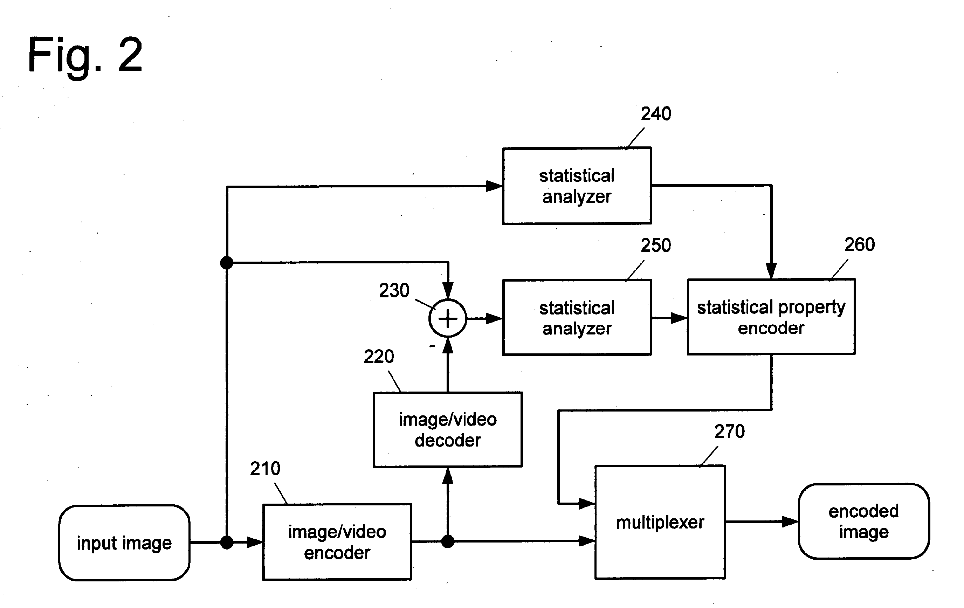

Figure 2 is a block diagram of an improved image/video encoder according to an embodiment of the present invention.

An input image is fed to a conventional image/video encoder 210. The encoder 210 may encode the input image according to any (lossy) coding scheme known in the art, including JPEG, MPEG-1,2,4, H-264/AVC, etc. The encoded image is decoded by an internal decoder 220. A subtractor 230 determines the difference between the original input signal and the internally decoded signal, i.e., the coding error. This difference signal is fed to statistical analyzer 250 in order to determine pertaining statistical properties of the coding error. The statistical properties are then encoded by means of statistical property encoder 260 and multiplexed together with the output of the image/video encoder 210 by means of multiplexer 270 to generate the encoded output image. In addition to the statistical properties of the coding error, the output may additionally comprise encoded statistical properties of the original input image determined by a second statistical analyzer 240.

The statistical properties determined by statistical analyzers 240, 250 correspond to those described above in conjunction with Fig. 1 and may comprise spatial properties of the images (correlations) and properties of the intensity histograms (marginal statistics). Specifically, values of the autocorrelation function in a neighborhood of zero may be determined, as well as moments of intensity and/or color distributions, including mean, variance, skewness, and kurtosis of the intensity distribution. To this end, the methods known in the art for estimating random variables may be employed.

The statistical property encoder 260 may employ any method known in the art to encode numerical data, ranging from plain binary formats to highly efficient entropy coding schemes. The statistical property encoder 260 and the multiplexer 270 may be designed to take particular advantage of the container format employed for storing conventionally encoded image and video data, such as JPEG, MPEG, etc., and store the statistical properties as metadata of the conventionally encoded image data. In this manner, the output of the improved image/video encoder remains compatible with a conventional image/video decoder, which may simply ignore the additional statistics information. On the other hand, an improved image/video decoder, which will be described below in greater detail, may employ the additional statistics information in order to provide enhanced output images.

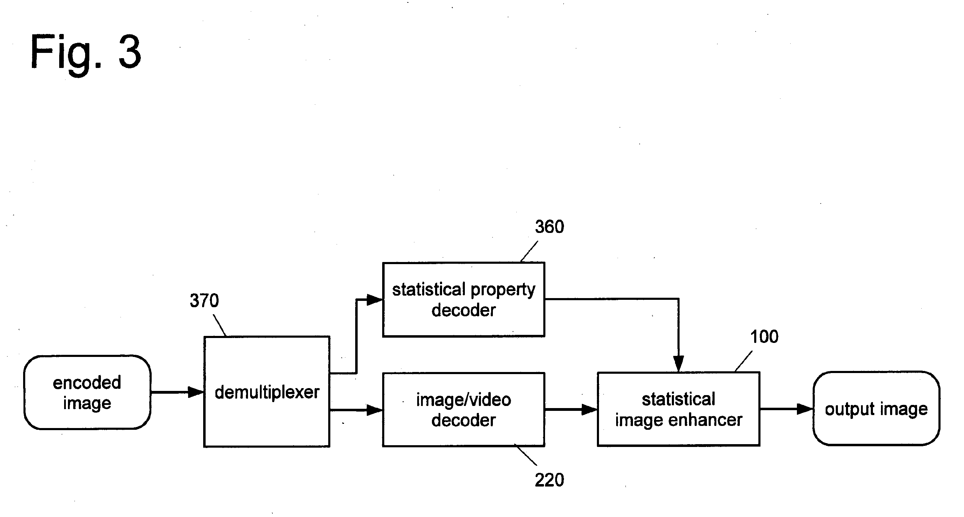

Figure 3 is a block diagram of such an improved image/video decoder according to an embodiment of the present invention.

Data representing an encoded image/video image is de-multiplexed by means of de-multiplexer 370 into data representing encoded statistical properties and data representing the encoded image proper, both of which are then decoded by appropriate decoders, viz. by statistical property decoder 360 and the conventional image/video decoder 220, respectively. As mentioned above, the conventional image/video decoder 220 may employ any coding scheme known in the art, in accordance with the scheme that has been employed to generate the encoded data in the first place. Likewise, the statistical property decoder 360 decodes the statistical data in accordance with the coding scheme employed by the statistical property encoder 260 described in conjunction with Fig. 2.

The decoded image and the decoded statistical properties are then fed to a statistical image enhancing unit 100. As described above in conjunction with Fig. 1, the statistical image enhancing unit 100 employs the statistical data for reconstructing image components, in particular high-frequency components, that are missing in the decoded image due to lossy compression (coding error).

In this manner, the subjective image quality of the decoded image can be improved without substantially increasing the amount of data that is to be encoded. In particular in the context of video coding, a major gain in coding efficiency may be achieved, because the statistical properties of the coding error are likely to remain the same for at least an entire sequence of video images. Hence, the statistical properties have to be determined, encoded, and transmitted only once for a plurality of video images. Moreover, some statistical properties of the coding error may be due to the optical and electrical properties of the camera and are thus entirely independent of the current image content. This observation may be exploited to further reduce the signaling overhead.

Instead of improving the subjective image quality and keeping the amount of data to be transmitted or stored constant, the present invention may also be employed to improve the compression gain by keeping image quality constant. A more rigorous quantization may, for instance, be compensated by employing the statistical image enhancement of the present invention. Further, input images may be low-pass filtered deliberately before feeding them to the conventional image/video encoder 210 in Fig. 2. Due the attenuation of the high-frequency components, the low-pass filtered images can be encoded more efficiently. At the decoder side, the statistical properties may then be employed to reconstruct the missing frequency components.

Summarizing, the present invention relates to image enhancement by exploiting statistical properties of reference images. In particular, images may be sharpened by reconstructing missing frequency components in accordance with statistical constraints that are determined from higher order statistical properties of a reference image that corresponds to the difference of the original image and a low-pass filtered version thereof. This form of statistical image enhancement may also be applied to image and video coding in order to achieve superior image qualities at higher compression gains by transmitting statistical properties of the coding error together with the encoded images.

## Claims

1. A method for encoding images, the method comprising the steps of
compressing (210) an input image; and
encoding (210) the compressed image;
**further characterized by**
computing (220, 230) a difference image of the input image and the compressed image;
extracting (250) statistical properties of the computed difference image; and
encoding (260) the extracted statistical properties of the computed difference image.

2. A method according to claim 1, wherein the extracted statistical properties of the computed difference image comprise values of the autocorrelation function of the computed difference image and at least one of mean, variance, skewness, and kurtosis.

3. A method according to claim 1 or 2, further comprising the steps of
extracting (240) statistical properties of the input image; and
encoding (260) the extracted statistical properties of the input image.

4. A method according to claim 3, wherein the extracted statistical properties of the input image comprise at least one of mean, variance, skewness, and kurtosis.

5. A method according to any of claims 1 to 4, wherein the input image is compressed by means of a transformation based coding scheme.

6. A method according to any of claims 1 to 5, further comprising the step of low-pass filtering the input image, and wherein the compressing step is applied to the low-pass filtered image rather than to the input image.

7. A method for decoding images, the method comprising the steps of
decoding (220) a compressed image; and
decompressing (220) the decoded image;
**further characterized by**
decoding (360) statistical properties of a difference image;
generating (120, 130) a first filter based on the decoded statistical properties of the difference image; filtered image; and
adding (140) the filtered image to the decompressed image to generate an output image.

8. A method according to claim 7, wherein the first filter is adapted to adjust statistical properties of the filtered image to the decoded statistical properties of the difference image.

9. A method according to claim 7 or 8, wherein the decoded statistical properties of the difference image comprise values of an autocorrelation function of the difference image and at least one of mean, variance, skewness, and kurtosis.

10. A method according to claim 9, further comprising the step of
extracting (120, 130) statistical properties of the decompressed image, including values of an autocorrelation function of the decompressed image and at least one of mean, variance, skewness, and kurtosis,
wherein the first filter is generated based on the decoded statistical properties of the difference image and the extracted statistical properties of the decompressed image.

11. A method according to any of claims 7 to 10, further comprising the step of
decoding (360) statistical properties of a reference image;
generating (150) a second filter based on the decoded statistical properties of the reference image; and
applying (150) the second filter to the output image.

12. A method according to claim 11, wherein the second filter is adapted to adjust statistical properties of the output image to the decoded statistical properties of the reference image.

13. A method according to claim 11 or 12, wherein the decoded statistical properties of the reference image comprise at least one of mean, variance, skewness, and kurtosis.

14. A method according to claim 13, further comprising the step of
extracting (150) statistical properties of the output image, including at least one of mean, variance, skewness, and kurtosis,
wherein the second filter is generated based on the decoded statistical properties of the reference image and the extracted statistical properties of the output image.

15. A method according to any of claims 7 to 14, further comprising the step of
computing (110) the difference between the output image and the decoded image; and
iterating the filtering steps and the adding step on the computed difference.

16. A method according to any of claims 7 to 15, wherein the decoded image is decompressed by means of a transformation based coding scheme.

17. A method for enhancing images, the method comprising the steps of
receiving an input image;
receiving statistical properties of a difference image;
generating (120, 130) a first filter based on the received statistical properties of the difference image;
applying (120, 130) the first filter to the input image to generate a filtered image; and
adding (140) the filtered image to the input image to generate an output image.

18. A method according to claim 17, wherein the first filter is adapted to adjust statistical properties of the filtered image to the received statistical properties of the difference image.

19. A method according to claim 17 or 18, wherein the received statistical properties of the difference image comprise values of an autocorrelation function of the difference image and at least one of mean, variance, skewness, and kurtosis.

20. A method according to claim 19, further comprising the step of
extracting (120, 130) statistical properties of the input image, including values of an autocorrelation function of the input image and at least one of mean, variance, skewness, and kurtosis,
wherein the first filter is generated based on the received statistical properties of the difference image and the extracted statistical properties of the input image.

21. A method according to any of claims 17 to 20, further comprising the step of
receiving statistical properties of a reference image;
generating (150) a second filter based on the received statistical properties of the reference image; and
applying (150) the second filter to the output image.

22. A method according to claim 21, wherein the second filter is adapted to adjust statistical properties of the output image to the received statistical properties of the reference image.

23. A method according to claim 21 or 22, wherein the received statistical properties of the reference image comprise at least one of mean, variance, skewness, and kurtosis.

24. A method according to claim 23, further comprising the step of
extracting (150) statistical properties of the output image, including at least one of mean, variance, skewness, and kurtosis,
wherein the second filter is generated based on the received statistical properties of the reference image and the extracted statistical properties of the output image.

25. A method according to any of claims 17 to 24, further comprising the step of
computing (110) the difference between the output image and the input image; and
iterating the filtering steps and the adding step on the computed difference.

26. An image encoder comprising
an image compressor (210) for compressing an input image; and
a first encoder (210) for encoding the compressed image;
**further characterized by**
a subtractor (230) for computing a difference image of the input image and the compressed image;
a first statistical analyzer (250) for extracting statistical properties of the computed difference image; and
a second encoder (260) for encoding the extracted statistical properties of the computed difference image.

27. An image encoder according to claim 26, wherein the extracted statistical properties of the computed difference image comprise values of the autocorrelation function of the computed difference image and at least one of mean, variance, skewness, and kurtosis.

28. An image encoder according to claim 26 or 27, further comprising
a second statistical analyzer (240) for extracting statistical properties of the input image; and
a third encoder for encoding the extracted statistical properties of the input image.

29. An image encoder according to claim 28, wherein the extracted statistical properties of the input image comprise at least one of mean, variance, skewness, and kurtosis.

30. An image encoder according to any of claims 26 to 29, wherein the image compressor (210) is adapted to compress the input image by means of a transformation based coding scheme.

31. An image encoder according to any of claims 26 to 30, further comprising a low-pass filter for low-pass filtering the input image, and wherein the image compressor is compressing the low-pass filtered image rather than the input image.

32. An image decoder comprising
a first decoder (220) for decoding a compressed image; and
an image decompresser (220) for decompressing the decoded image;
**further characterized by**
a second decoder (360) for decoding statistical properties of a difference image;
a first image processing unit (120, 130) for generating a first filter based on the decoded statistical properties of the difference image and for applying the first filter to the decompressed image to generate a filtered image; and
an adder (140) for adding the filtered image to the decompressed image to generate an output image.

33. An image decoder according to claim 32, wherein the first filter is adapted to adjust statistical properties of the filtered image to the decoded statistical properties of the difference image.

34. An image decoder according to claim 32 or 33, wherein the decoded statistical properties of the difference image comprise values of an autocorrelation function of the difference image and at least one of mean, variance, skewness, and kurtosis.

35. An image decoder according to claim 34, wherein the first image processing unit (120, 130) is further adapted to extract statistical properties of the decompressed image, including values of an autocorrelation function of the decompressed image and at least one of mean, variance, skewness, and kurtosis, and to generate the first filter based on the decoded statistical properties of the difference image and the extracted statistical properties of the decompressed image.

36. An image decoder according to any of claims 32 to 35, further comprising
a third decoder (360) for decoding statistical properties of a reference image;
a second image processing unit (150) for generating a second filter based on the decoded statistical properties of the reference image and for applying the second filter to the output image.

37. An image decoder according to claim 36, wherein the second filter is adapted to adjust statistical properties of the output image to the decoded statistical properties of the reference image.

38. An image decoder according to claim 36 or 37, wherein the decoded statistical properties of the reference image comprise at least one of mean, variance, skewness, and kurtosis.

39. An image decoder according to claim 38, wherein the second image processing unit (150) is further adapted to extract statistical properties of the output image, including at least one of mean, variance, skewness, and kurtosis, and to generate the second filter based on the decoded statistical properties of the reference image and the extracted statistical properties of the output image.

40. An image decoder according to any of claims 32 to 39, further comprising
a subtractor (110) for computing the difference between the output image and the decoded image; and
a control unit for iterating the filtering operation and the adding operation on the computed difference.

41. An image decoder according to any of claims 32 to 40, wherein the image decompresser (220) is adapted to decompress the decoded image by means of a transformation based coding scheme.

42. An image processing apparatus for enhancing images, the apparatus comprising
a first input means for receiving an input image;
a second input means for receiving statistical properties of a difference image;
a first image processing unit (120, 130) for generating a first filter based on the received statistical properties of the difference image and for applying the first filter to the input image to generate a filtered image; and
an adder (140) for adding the filtered image to the input image to generate an output image.

43. An image processing apparatus according to claim 42, wherein the first filter is adapted to adjust statistical properties of the filtered image to the received statistical properties of the difference image.

44. An image processing apparatus according to claim 42 or 43, wherein the received statistical properties of the difference image comprise values of an autocorrelation function of the difference image and at least one of mean, variance, skewness, and kurtosis.

45. An image processing apparatus according to claim 44, wherein the first image processing unit (120, 130) is further adapted to extracting statistical properties of the input image, including values of an autocorrelation function of the input image and at least one of mean, variance, skewness, and kurtosis, and to generate the first filter based on the received statistical properties of the difference image and the extracted statistical properties of the input image.

46. An image processing apparatus according to any of claims 42 to 45, further comprising
a third input means for receiving statistical properties of a reference image;
a second image processing unit (150) for generating a second filter based on the received statistical properties of the reference image and for applying the second filter to the output image.

47. An image processing apparatus according to claim 46, wherein the second filter is adapted to adjust statistical properties of the output image to the received statistical properties of the reference image.

48. An image processing apparatus according to claim 46 or 47, wherein the received statistical properties of the reference image comprise at least one of mean, variance, skewness, and kurtosis.

49. An image processing apparatus according to claim 48, wherein the second image processing unit (150) is further adapted to extract statistical properties of the output image, including at least one of mean, variance, skewness, and kurtosis, and to generate the second filter based on the received statistical properties of the reference image and the extracted statistical properties of the output image.

50. An image processing apparatus according to any of claims 42 to 49, further comprising
a subtractor (110) for computing the difference between the output image and the input image; and
a control unit for iterating the filtering steps and the adding step on the computed difference.
